# EUROPÄISCHE PATENTSCHRIFT

(11) **EP 3 867 570 B1**
(45) Veröffentlichungstag und Bekanntmachung des Hinweises auf die Patenterteilung: **02.11.2022**
(21) Anmeldenummer: 19766213.3
(22) Anmeldetag: 05.09.2019
(51) Int. Cl.: F22B 37/38, G01L 19/14

(54) **ANORDNUNG UMFASSEND EINE DRUCKENTNAHMELEITUNG MIT EINEM DRUCKMESSGERÄT SOWIE EINE DURCHFLUSSMESSSTELLE UMFASSEND EINE SOLCHE ANORDNUNG**
ASSEMBLY COMPRISING A PRESSURE REMOVAL LINE WITH A PRESSURE MEASURING DEVICE, AS WELL AS A THROUGH-FLOW MEASURING POINT COMPRISING AN ASSEMBLY OF THIS TYPE
DISPOSITIF COMPRENANT UNE CONDUITE DE PRISE DE PRESSION AVEC UN MANOMÈTRE ET POINT DE MESURE DU DÉBIT COMPRENANT UN TEL DISPOSITIF

(30) Priorität: 17.10.2018 DE 102018125776
(43) Veröffentlichungstag der Anmeldung: 25.08.2021
(73) Patentinhaber: Endress + Hauser Flowtec AG, 4153 Reinach (CH)
(72) Erfinder: HÖCKER, Rainer, 79761 Waldshut (DE); KESSLER, Daniel, 4402 Frenkendorf (CH)
(74) Vertreter: Waselikowski, Stefan
(86) Internationale Anmeldenummer: PCT/EP2019/073740
(87) Internationale Veröffentlichungsnummer: WO 2020/078617

(56) Entgegenhaltungen:
- CN-Y- 201 241 692
- JP-A- 2000 186 969
- RU-C1- 2 554 955

## Beschreibung

Die Erfindung betrifft eine Anordnung umfassend eine Druckentnahmeleitung mit einem Druckmessgerät sowie eine Durchflussmessstelle umfassend eine solche Anordnung. Druckentnahmeleitungen werden beispielsweise bei Kraftwerken eingesetzt, um einen Mediendruck in einer dampfführenden Rohrleitung messen zu können, siehe beispielsweise die DE29522322U1, EP0334235A1 oder RU2554955C1 . Solche Druckentnahmeleitungen weisen üblicherweise einen Siphon auf, in welchem das dampfbildende Medium kondensiert gesammelt wird. Das Kondensat ist dazu eingerichtet, ein an die Druckentnahmeleitung angeschlossenes Druckmessgerät vor Druckstößen und vor hohen Temperaturen zu schützen, damit das Druckmessgerät während des Betriebs nicht beschädigt wird.

Je nach Einsatzort kann eine solche Druckentnahmeleitung auch im Freien angeordnet sein und ist dann Wind und Wetter ausgesetzt. Dies kann insbesondere im Winter bei Frosttemperaturen und Vorliegen von Wind dazu führen, dass das Kondensat im Siphon ausfriert und eine Druckmessung nicht mehr möglich ist. Gegebenenfalls kann auch die Druckentnahmeleitung durch ein solches Ausfrieren beschädigt werden. Um ein solches Ausfrieren zu verhindern, wird bislang im Winter eine Heizvorrichtung/Isolierung im Bereich des Siphons angebracht. Dies ist jedoch aufwändig, und die Heizvorrichtung/Isolierung muss im Sommer wieder entfernt werden, damit das Medium im Siphon weiterhin kondensieren kann. Einer Heizvorrichtung muss auch kontinuierlich elektrische Leistung zugeführt werden. Aufgabe der Erfindung ist es daher, eine wetterunabhängig funktionierende Anordnung sowie eine Durchflussmessstelle mit einer solchen Anordnung vorzuschlagen.

Die Aufgabe wird gelöst durch eine Anordnung gemäß dem unabhängigen Anspruch 1 sowie durch eine Durchflussmessstelle gemäß dem unabhängigen Anspruch 14.

Eine erfindungsgemäße Anordnung umfasst:
eine Druckentnahmeleitung mit einem ersten Ende und einem zweiten Ende,
ein Druckmessgerät zum Erfassen eines Drucks innerhalb der Druckentnahmeleitung,
wobei die Druckentnahmeleitung dazu eingerichtet ist, mittels des ersten Endes an ein dampfführendes Rohr angeschlossen zu werden, wobei das Druckmessgerät dazu eingerichtet ist, am zweiten Ende der Druckentnahmeleitung angeschlossen zu werden,
wobei die Druckentnahmeleitung einen abschnittsweise bogenförmig ausgestalteten Siphon aufweist, welcher dazu eingerichtet ist, ein Kondensat des Dampfs zu beinhalten,
wobei die Anordnung dazu eingerichtet ist, im Freien eingesetzt zu werden,
wobei die Anordnung einen Windschutz umfasst, welcher dazu eingerichtet ist, zumindest im Bereich des Siphons atmosphärisch bedingte Luftbewegungen zu verringern.

Das Verringern atmosphärisch bedingter Luftbewegungen minimiert das Risiko eines Ausfrierens. Da lokale Konvektion durch Temperaturunterschiede zwischen Druckentnahmeleitung und Umgebungsluft bedingt weiterhin möglich ist, kann auch im Sommer bei hohen Temperaturen ein notwendiger Temperaturausgleich zwischen Druckentnahmeleitung und Umgebungsluft stattfinden. Somit ist ein wartungsarmer Betrieb der Anordnung bei jedem Wetter sichergestellt.

In einer Ausgestaltung weist der Windschutz eine rohrförmige Wandung mit einem ersten offenen Ende sowie einem zweiten offenen Ende auf, wobei eine Einhüllende des Windschutzes ein Innenvolumen einschließt, in welchem Innenvolumen der Siphon angeordnet ist, wobei ein Querschnitt der rohrförmigen Wandung beispielsweise einem Kreis, einem Oval, oder einem Rechteck folgt.

Die Querschnittsgeometrie kann von einem Fachmann an lokale Bedingungen wie beispielsweise einer Druckentnahmeleitungsgeometrie angepasst bzw. entsprechend gewählt werden.

In einer Ausgestaltung ist das Innenvolumen des Windschutzes gleich einer dritten Potenz eines Außenradius eines Siphonbogens multipliziert mit einem Faktor F,
wobei F kleiner 1000, und insbesondere kleiner 200 und bevorzugt kleiner 100 ist.

Der Windschutz muss groß genug sein, um eine ausreichende Konvektion zuzulassen, und klein genug, um auch bei stürmischem Wetter geringen Windwiderstand zu bieten.

In einer Ausgestaltung weist die Druckentnahmeleitung einen dem ersten Ende zugewandten ersten Abschnitt und einen dem zweiten Ende zugewandten zweiten Abschnitt auf, wobei die Wandung des Windschutzes zumindest eine Aussparung aufweist, mittels welcher der Windschutz an der Druckentnahmeleitung gelagert ist, wobei die Druckentnahmeleitung durch die Aussparung verläuft.

Die Druckentnahmeleitung kann somit zumindest teilweise ein Halt für den Windschutz bieten.

In einer Ausgestaltung weist der Siphonbogen eine Innenseite und eine Außenseite auf, wobei der Windschutz eine Haltevorrichtung aufweist, welche Haltevorrichtung dazu eingerichtet ist, auf der Innenseite des Siphons aufzuliegen. Somit ist der Windschutz gegenüber der Schwerkraft durch die Druckentnahmeleitung gehalten.

In einer Ausgestaltung umfasst die Haltevorrichtung einen Steg, welcher Steg mittels zweier Öffnungen in der Wandung an der Wandung gelagert ist.

Ein solcher Steg kann beispielsweise durch eine Schraube mit einer Mutter ausgebildet sein. Beispielsweise eine solche Ausgestaltung ist nachträglich an die Wandung anbringbar.

In einer Ausgestaltung weist mindestens eine Aussparung ein Auflager auf. In diesem Fall ist ein Halt gegenüber der Schwerkraft zumindest teilweise durch das Auflager gegeben.

In einer Ausgestaltung weist zumindest eine Lagerung des Windschutzes an der Druckentnahmeleitung eine thermische Isolierung auf,
wobei die thermische Isolierung eine thermische Leitfähigkeit aufweist, welche mindestens um einen Faktor 5 und insbesondere mindestens um einen Faktor 25, und bevorzugt mindestens um einen Faktor 100 geringer ist als eine thermische Leitfähigkeit der Druckentnahmeleitung.

Eine solche thermische Isolierung kann beispielsweise an der rohrförmigen Wandung oder an der Halterung angebracht sein. Alternativ kann auch die Druckentnahmeleitung im Bereich einer Lagerung eine thermische Isolierung aufweisen, welche beispielsweise manschettenförmig ausgebildet ist.

In einer Ausgestaltung ist die Wandung aus einem Blech gefertigt ist, wobei das Blech beispielsweise Aluminium, Stahl oder einen Kunststoff aufweist.

In einer Ausgestaltung umfasst der Windschutz zumindest ein Deckelelement, welches dazu eingerichtet ist, das erste offene Ende oder das zweite offene Ende der rohrförmigen Wandung teilweise zu verschließen.

Ein Deckelelement, welches das erste offene Ende oder das zweite offene Ende teilweise verschließt, verringert die Möglichkeit, dass ein Wind in das Innenvolumen hineindringt. Der nur teilweise Verschluss ermöglicht jedoch weiterhin praktisch ungehinderte Konvektion.

In einer Ausgestaltung umfasst das Deckelelement eine aerodynamisch wirksame Vorrichtung, welche aerodynamisch wirksame Vorrichtung dazu eingerichtet ist, atmosphärisch bedingte Luftbewegungen an einer Öffnung des Deckels vorbei zu leiten. Auf diese Art und Weise kann ein Wind am ersten offenen Ende bzw. zweiten offenen Ende vorbeigeleitet werden.

Alternativ zu einem Deckelelement kann die Wandung im Bereich des ersten offenen Endes oder des zweiten offenen Endes jeweils mindestens eine Faltung bzw. Abkantung aufweisen, wobei die Faltung / Abkantung das erste offene Ende bzw. das zweite offene Ende teilweise verschließt. Das erste bzw. zweite offene Ende ist hierbei durch den rohrförmigen Bereich der Wandung definiert.

In einer Ausgestaltung ist der Siphon von der Wandung beabstandet. Somit ist ein Temperaturausgleich zwischen Windschutz und Siphon minimiert, was ein Ausfrieren des Siphons im Winter verhindert.

In einer Ausgestaltung weist die Druckentnahmeleitung an ihrem zweiten Ende ein Ventil auf, welches Ventil dazu eingerichtet ist, ein sicheres Anschließen des Druckmessgeräts zu ermöglichen,
wobei das Ventil insbesondere ein Betätigungselement mit einer Längsachse, wie beispielsweise einen Drehgriff aufweist, welche Längsachse einen Winkel von weniger als 60 Grad, und insbesondere weniger als 45 Grad, und bevorzugt weniger als 30 Grad zu einem Radius der Druckentnahmeleitung aufweist.

Eine erfindungsgemäße Durchflussmessstelle zur Messung eines Volumendurchflusses oder einer Durchflussgeschwindigkeit oder eines Massedurchflusses eines dampfförmigen Mediums in einer Rohrleitung umfasst:
ein Durchflussmessgerät mit einem Messrohr, wobei das Messrohr mit der Rohrleitung verbunden ist,
eine Anordnung gemäß einem der vorigen Ansprüche, wobei die Druckentnahmeleitung am Messrohr des Durchflussmessgeräts angeschlossen ist.

In einer Ausgestaltung ist das Durchflussmessgerät ein Vortex-Durchflussmessgerät, ein Ultraschall-Durchflussmessgerät, ein thermisches Durchflussmessgerät oder ein Differenzdruckmessgerät.

Im Folgenden wird die Erfindung anhand von Ausführungsbeispielen beschrieben.
Fig. 1 skizziert eine beispielhafte Druckentnahmeleitung;
Fig. 2 skizziert eine erfindungsgemäße Anordnung mit Windschutz;
Fig. 3 skizziert erfindungsgemäße Aussparungen in einer Wandung des Windschutzes sowie eine Lagerung der Druckentnahmeleitung in der Aussparung;
Fig. 4 skizziert erfindungsgemäße Aussparungen in einer Wandung des Windschutzes sowie eine Lagerung der Druckentnahmeleitung in der Aussparung;
Figs. 5 a) und 5 b) skizzieren beispielhafte erfindungsgemäße Druckentnahmeleitungsgeometrien sowie entsprechend angepasste Wandungen des Windschutzes;
Fig. 6 skizziert ein Deckelelement und mögliche Anordnungen des Deckelelements an der Wandung des Windschutzes;
Fig. 7 skizziert eine beispielhafte erfindungsgemäße Durchflussmessstelle.

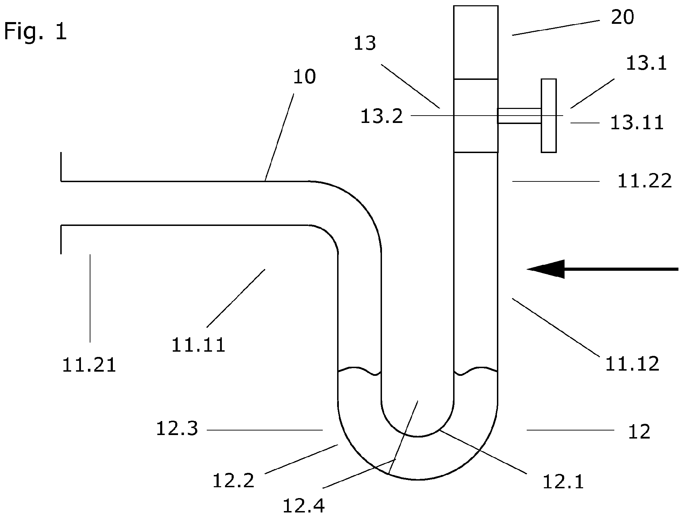

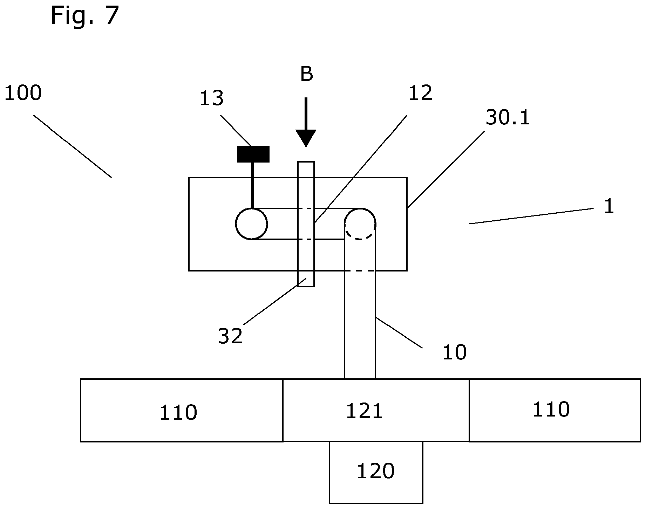

Fig. 1 skizziert eine beispielhafte bekannte Druckentnahmeleitung 10, welche an einem zweiten Ende 11.22 ein Ventil 13 aufweist, an welchem ein Druckmessgerät 20 angeschlossen ist. Die Druckentnahmeleitung weist einen Siphon 12 auf, welcher ein kondensiertes Medium beinhaltet. Der Siphon weist einen Siphonbogen12.3 mit einer Innenseite 12.1 und einer Außenseite 12.2 auf, wobei die Außenseite einen Außenradius 12.4 aufweist. Das Ventil weist ein Betätigungselement 13.1, beispielsweise einen Drehgriff 13.11 auf, wobei das Betätigungselement entlang einer Längsachse 13.2 angeordnet ist. Ein solches Ventil ist fakultativ, ein Druckmessgerät kann auch an eine Druckentnahmeleitung ohne Ventil angeschlossen werden. Die Druckentnahmeleitung kann über ein erstes Ende 11.21 beispielsweise an ein Durchflussmessgerät 120 angeschlossen werden, siehe Fig. 7. Eine solche im Freien befindliche Druckentnahmeleitung kann im Winter bei Frosttemperaturen und Wind (durch Pfeil angedeutet) Gefahr laufen, dass das kondensierte Medium ausfriert.

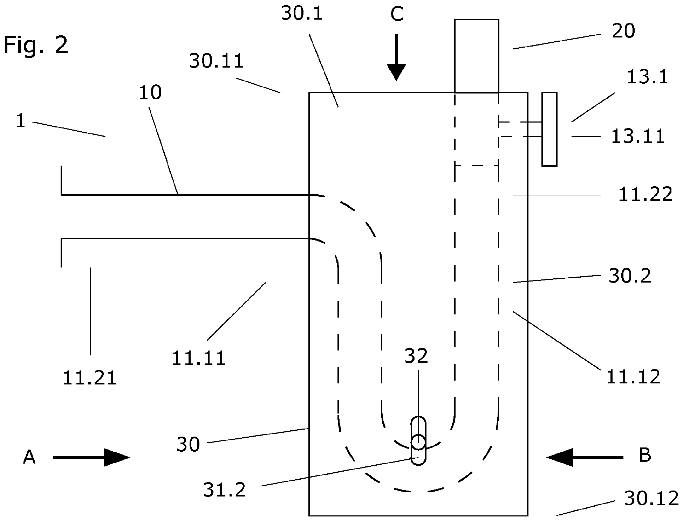

Fig. 2 skizziert eine erfindungsgemäße Anordnung 1 umfassend eine Druckentnahmeleitung 10 wie in Fig. 1 gezeigt mit einem daran angeordneten Windschutz 30, welcher dazu eingerichtet ist, die Druckentnahmeleitung im Bereich des Siphons 12 zu schützen. Der Windschutz weist eine rohrförmige Wandung 30.1 auf, welche beispielsweise einen runden, eckigen oder ovalen Querschnitt aufweist. Die Wandung weist ein erstes offenes Ende 30.11 und ein zweites offenes Ende 30.12 auf und hüllt ein Innenvolumen 30.2 ein, wobei das erste offene Ende bzgl. einer Vertikalen oberhalb des zweiten offenen Endes angeordnet ist,

Aufgrund der offenen Enden ist der Windschutz durchströmbar, eine Konvektion kann also einen Luftaustausch zwischen Innenvolumen und der Umgebung verursachen, der Siphon ist jedoch von eine direkten Anströmung durch einen Wind zumindest teilweise geschützt. Der Windschutz kann wie hier gezeigt eine Haltevorrichtung 32 aufweisen, mittels welcher der Windschutz an der Innenseite des Siphons gegenüber der Schwerkraft gehalten ist. Die Haltevorrichtung kann beispielsweise einen Steg aufweisen, welcher zwei Seiten der Wandung verbindet und an Öffnungen der Wandung 31.2 befestigt ist. Der Steg kann beispielsweise eine Schraube mit einer Mutter aufweisen. Die Öffnungen der Wandung 31.2 sind vorteilhafterweise länglich ausgebildet, so dass eine Positionierung der Stege entlang der länglichen Ausdehnung möglich ist. Die rohrförmige Wandung ist beispielsweise aus einem Blech gefertigt, wobei das Blech beispielsweise Aluminium, Stahl oder einen Kunststoff aufweist.

Die Aussparungen ermöglichen es, die Wandung des Windschutzes von unten bis zu einem Anschlagen an den Lagerpunkten über den Siphon zu schieben. Ein anschließendes Einrichten der Haltevorrichtung sichert den Windschutz gegen Fallen.

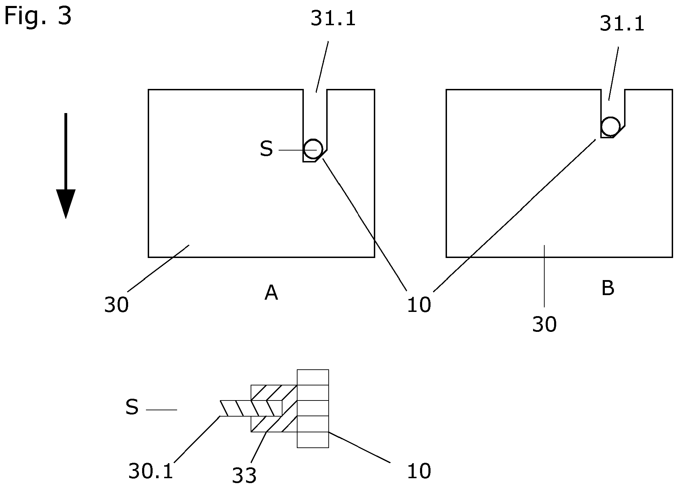

Fig. 3 skizziert schematisch zwei durch in Fig. 2 mit A und B gekennzeichnete Seitenansichten auf den Windschutz 30, welche jeweils eine Aussparung 31.1 aufweisen, durch welche Aussparung die Druckentnahmeleitung 10 verläuft. Die Gewichtskraft zeigt dabei in die durch den Pfeil angedeutete Richtung. Die Aussparung kann wie hier gezeigt, eine Abschrägung aufweisen, um eine Zwei-Punkt-Lagerung der Druckentnahmeleitung zu ermöglichen. Auf diese Weise kann die Druckentnahmeleitung vom Windschutz besser entkoppelt werden. Die Wandung 30.1 kann wie in der Schnittansicht S gezeigt im Bereich der Lagerung eine thermische Isolierung 33 aufweisen, welche eine deutlich geringere thermische Leitfähigkeit als die Druckentnahmeleitung aufweist. Die thermische Isolierung weist dabei eine thermische Leitfähigkeit auf, welche mindestens um einen Faktor 5 und insbesondere mindestens um einen Faktor 25, und bevorzugt mindestens um einen Faktor 100 geringer ist als eine thermische Leitfähigkeit der Druckentnahmeleitung. Anders als hier dargestellt kann alternativ oder zusätzlich die Druckentnahmeleitung eine thermische Isolierung, beispielsweise in Form einer Manschette aufweisen. Typische Materialen, welche zur Herstellung einer Druckentnahmeleitung hergestellt werden sind beispielsweise Stähle, Nichteisenlegierungen oder Aluminium. Stähle weisen eine thermische Leitfähigkeit von 12 bis 60 W/(m*K) auf. Als thermische Isolierung kommen beispielsweise Kunststoffe, insbesondere hochtemperaturbeständige Kunststoffe wie beispielsweise Polyurethan oder auch Mineralwolle in Frage. Diese thermisch isolierenden Stoffe weisen üblicherweise eine thermische Leitfähigkeit von unter 0.1 W/(m*K) auf.

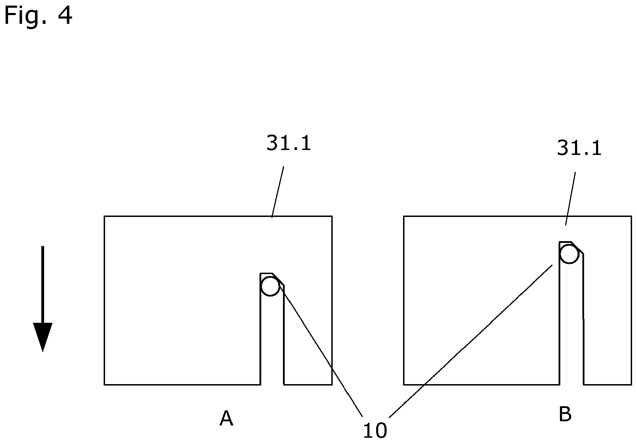

Fig. 4 skizziert eine alternative Ausgestaltung der in Fig. 3 gezeigten Aussparungen, wobei die Aussparungen in Richtung der Gewichtskraft gerichtet sind. Die Aussparungen bieten somit ein Auflager, so dass eine Haltevorrichtung gemäß Fig. 3 nicht benötigt wird. Nachteilhaft daran ist, dass die geometrischen Abmessungen der Aussparungen deutlich größer ausfallen und der Windschutz keinen guten Schutz vor Wind bietet.

Der in Fig. 3 und Fig. 4 skizzierte Windschutz ist einstückig. Alternativ kann ein solcher Windschutz auch aus mehreren beispielsweise zusammengesteckten Teilen bestehen. In diesem Fall kann eine die Druckentnahmeleitung aufnehmende Öffnung durch jeweils eine Aussparung zweier Windschutzteile gebildet werden.

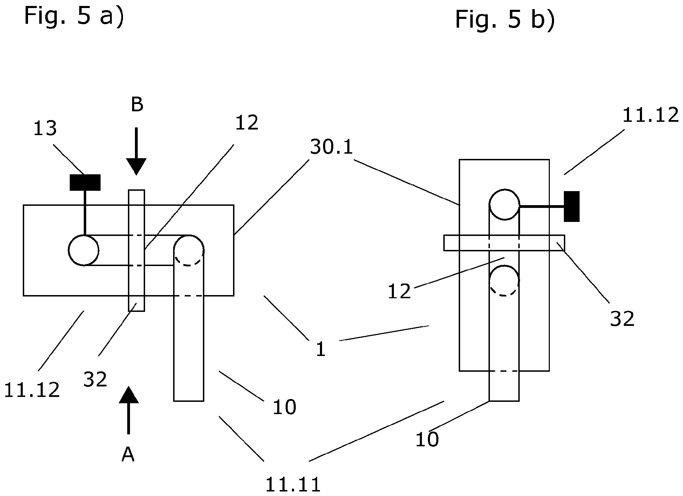

Fig. 5 a) und b) skizzieren jeweils eine erfindungsgemäße Ausgestaltung aus der in Fig. 2 mit C gekennzeichneten Richtung, wobei der Siphon in Fig. 5 a) im zweiten Abschnitt 11.12 einen rechten Winkel zur Druckentnahmeleitung im ersten Abschnitt 11.11 aufweist. In der in Fig. 5 b) gezeigten Ausgestaltung verläuft die Druckentnahmeleitung entlang einer Ebene. Die Orientierung des Ventils und der Betätigung sind rein beispielhaft. Der Fachmann wird den Windschutz an eine gegebene Druckentnahmeleitung gemäß seiner Bedürfnisse anpassen.

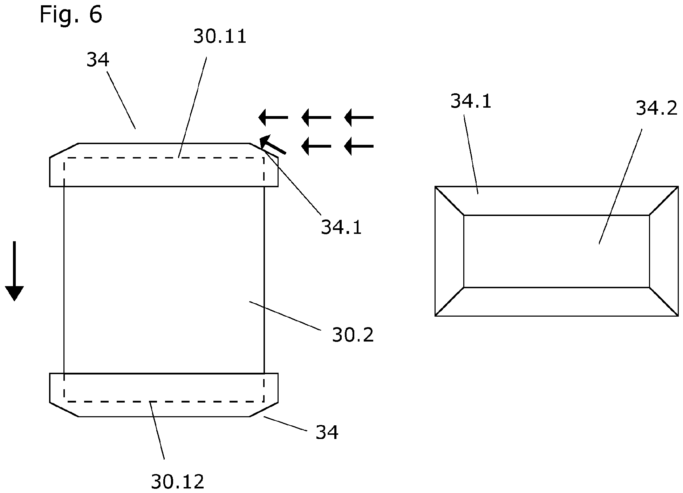

Fig. 6 skizziert ein Deckelelement 34 und mögliche Anordnungen an der Wandung 30.2 des Windschutzes. Das Deckelelement weist eine kleinere Öffnung 34.2 auf als das erste offene Ende 30.11 bzw. das zweite offene Ende der Wandung 30.12. Zusätzlich kann das Deckelelement eine aerodynamisch wirksame Vorrichtung 34.1 aufweisen, welche einen Wind davon abhält, in die Öffnung des Deckelelements 34.2 einzudringen. Beispielsweise kann die aerodynamisch wirksame Vorrichtung eine schräg angestellte Fläche aufweisen, welche einen Strömungsabriss bewirkt. Ein Windschutz mit Deckelelement bietet einen verbesserten Windschutz bei praktisch gleichbleibender Konvektionsfähigkeit der Luft durch das Innenvolumen des Windschutzes.

Alternativ zu einem Deckelelement kann die Wandung im Bereich des ersten offenen Endes oder des zweiten offenen Endes jeweils mindestens eine Faltung bzw. Abkantung aufweisen, wobei die Faltung / Abkantung das erste offene Ende bzw. das zweite offene Ende teilweise verschließt. Das erste bzw. zweite offene Ende ist hierbei durch den rohrförmigen Bereich der Wandung definiert.

Fig. 7 skizziert schematisch eine Durchflussmessstelle 100 mit einer erfindungsgemäßen Anordnung 1, einer Rohrleitung 110 und einem Durchflussmessgerät 120, welches über ein Messrohr 121 an der Rohrleitung angeschlossen ist. Die Anordnung 1 ist dabei über die Druckentnahmeleitung an das Messrohr des Durchflussmessgeräts angeschlossen.

Das Durchflussmessgerät ist beispielsweise ein Vortex-Durchflussmessgerät, ein Ultraschall-Durchflussmessgerät, ein thermisches Durchflussmessgerät oder ein Differenzdruck-Durchflussmessgerät.

### Bezugszeichenliste

- 1: Anordnung
- 10: Druckentnahmeleitung
- 11.11: erster Abschnitt
- 11.12: zweiter Abschnitt
- 11.21: erstes Ende
- 11.22: zweites Ende
- 12: Siphon
- 12.1: Innenseite
- 12.2: Außenseite
- 12.3: Siphonbogen
- 12.4: Außenradius
- 13: Ventil
- 13.1: Betätigungselement
- 13.11: Drehgriff
- 13.2: Längsachse
- 20: Druckmessgerät
- 30: Windschutz
- 30.1: rohrförmige Wandung
- 30.11: erstes offenes Ende
- 30.12: zweites offenes Ende
- 30.2: Innenvolumen
- 31.1: Aussparung
- 31.2: Öffnung der Wandung
- 32: Haltevorrichtung
- 33: thermische Isolierung
- 34: Deckelelement
- 34.1: aerodynamisch wirksame Vorrichtung
- 34.2: Öffnung des Deckelelements
- 100: Durchflussmessstelle
- 110: Rohrleitung
- 120: Durchflussmessgerät
- 121: Messrohr des Durchflussmessgeräts

## Patentansprüche

1. Anordnung (1) umfassend:
eine Druckentnahmeleitung (10) mit einem ersten Ende (11.21) und einem zweiten Ende (11.22),
ein Druckmessgerät (20) zum Erfassen eines Drucks innerhalb der Druckentnahmeleitung,
wobei die Druckentnahmeleitung dazu eingerichtet ist, mittels des ersten Endes an ein dampfführendes Rohr angeschlossen zu werden, wobei das Druckmessgerät dazu eingerichtet ist, am zweiten Ende der Druckentnahmeleitung angeschlossen zu werden,
wobei die Druckentnahmeleitung einen abschnittsweise bogenförmig ausgestalteten Siphon (12) aufweist, welcher dazu eingerichtet ist, ein Kondensat des Dampfs zu beinhalten,
wobei die Anordnung dazu eingerichtet ist, im Freien eingesetzt zu werden,
**dadurch gekennzeichnet, dass** die Anordnung einen Windschutz (30) umfasst, welcher dazu eingerichtet ist, zumindest im Bereich des Siphons atmosphärisch bedingte Luftbewegungen zu verringern.

2. Anordnung nach Anspruch 1,
wobei der Windschutz eine rohrförmige Wandung (30.1) mit einem ersten offenen Ende (30.11) sowie einem zweiten offenen Ende (30.22) aufweist, wobei eine Einhüllende des Windschutzes ein Innenvolumen (30.2) einschließt, in welchem Innenvolumen der Siphon angeordnet ist,
wobei das erste offene Ende bzgl. einer Vertikalen oberhalb des zweiten offenen Endes angeordnet ist,
wobei ein Querschnitt der rohrförmigen Wandung beispielsweise einem Kreis, einem Oval, oder einem Rechteck folgt.

3. Anordnung nach Anspruch 1 oder 2,
wobei das Innenvolumen des Windschutzes gleich einer dritten Potenz eines Außenradius (12.4) eines Siphonbogens (12.3) multipliziert mit einem Faktor F ist,
wobei F kleiner 1000, und insbesondere kleiner 200 und bevorzugt kleiner 100 ist.

4. Anordnung nach Anspruch 2 oder 3,
wobei die Druckentnahmeleitung einen dem ersten Ende zugewandten ersten Abschnitt (11.11) und einen dem zweiten Ende zugewandten zweiten Abschnitt (11.12) aufweist,
wobei die Wandung des Windschutzes zumindest eine Aussparung (31.1) aufweist, mittels welcher der Windschutz an der Druckentnahmeleitung gelagert ist, wobei die Druckentnahmeleitung durch die Aussparung verläuft.

5. Anordnung nach einem der Ansprüche 3 oder 4,
wobei der Siphonbogen eine Innenseite (12.1) und eine Außenseite (12.2) aufweist,
wobei der Windschutz eine Haltevorrichtung (32) aufweist, welche Haltevorrichtung dazu eingerichtet ist, auf der Innenseite des Siphons aufzuliegen.

6. Anordnung nach Anspruch 5,
wobei die Haltevorrichtung einen Steg (32.1) umfasst, welcher Steg mittels zweier Öffnungen in der Wandung (31.2) an der Wandung gelagert ist.

7. Anordnung nach einem der Ansprüche 4 bis 6,
wobei mindestens eine Aussparung ein Auflager (31.1) aufweist.

8. Anordnung nach einem der Ansprüche 4 bis 7,
wobei zumindest eine Lagerung des Windschutzes an der Druckentnahmeleitung eine thermische Isolierung (33) aufweist,
wobei die thermische Isolierung eine thermische Leitfähigkeit aufweist, welche mindestens um einen Faktor 5 und insbesondere mindestens um einen Faktor 25, und bevorzugt mindestens um einen Faktor 100 geringer ist als eine thermische Leitfähigkeit der Druckentnahmeleitung.

9. Anordnung nach einem der Ansprüche 3 bis 8,
wobei die Wandung aus einem Blech gefertigt ist, wobei das Blech beispielsweise Aluminium, Stahl oder einen Kunststoff aufweist.

10. Anordnung nach einem der Ansprüche 3 bis 9,
wobei der Windschutz zumindest ein Deckelelement (34) umfasst, welches dazu eingerichtet ist, das erste offene Ende oder das zweite offene Ende der rohrförmigen Wandung teilweise zu verschließen.

11. Anordnung nach Anspruch 10,
wobei das Deckelelement eine aerodynamisch wirksame Vorrichtung (34.1) aufweist, welche aerodynamisch wirksame Vorrichtung dazu eingerichtet ist, atmosphärisch bedingte Luftbewegungen an einer Öffnung des Deckels (34.2) vorbei zu leiten.

12. Anordnung nach einem der Ansprüche 3 bis 11,
wobei der Siphon von der Wandung beabstandet ist.

13. Anordnung nach einem der vorigen Ansprüche,
und wobei die Druckentnahmeleitung an ihrem zweiten Ende ein Ventil (13) aufweist, welches Ventil dazu eingerichtet ist, ein sicheres Anschließen des Druckmessgeräts zu ermöglichen,
wobei das Ventil insbesondere ein Betätigungselement (13.1) mit einer Längsachse (13.2), wie beispielsweise einen Drehgriff (13.11) aufweist, welche Längsachse einen Winkel von weniger als 60 Grad, und insbesondere weniger als 45 Grad, und bevorzugt weniger als 30 Grad zu einem Radius der Druckentnahmeleitung aufweist.

14. Durchflussmessstelle (100) zur Messung eines Volumendurchflusses oder einer Durchflussgeschwindigkeit oder eines Massedurchflusses eines dampfförmigen Mediums in einer Rohrleitung umfassend:
eine Rohrleitung (110),
ein Durchflussmessgerät (120) mit einem Messrohr (121), wobei das Messrohr mit der Rohrleitung verbunden ist,
eine Anordnung (1) gemäß einem der vorigen Ansprüche, wobei die Druckentnahmeleitung am Messrohr des Durchflussmessgeräts angeschlossen ist.

15. Durchflussmessstelle nach Anspruch 14,
wobei das Durchflussmessgerät ein Vortex-Durchflussmessgerät, ein Ultraschall-Durchflussmessgerät, ein thermisches Durchflussmessgerät oder ein Differenzdruck-Durchflussmessgerät ist.

## Claims

1. Arrangement (1) comprising:
a pressure tapping line (10) with a first end (11.21) and a second end (11.22),
a pressure measuring device (20) designed to measure a pressure inside the pressure tapping line,
wherein the pressure tapping line is designed to be connected to a pipe conducting vapor via the first end, wherein the pressure measuring device is designed to be connected to the second end of the pressure tapping line, wherein
the pressure tapping line has a siphon (12) partially designed in the form of an arc, wherein said siphon is designed to contain a condensate of the vapor,
wherein the arrangement is designed to be used outside,
**characterized in that** the arrangement comprises a windshield (30), which is designed to reduce movements of air due to the atmosphere at least in the area of the siphon.

2. Arrangement as claimed in Claim 1,
wherein the windshield has a tubular wall (30.1) with a first open end (30.11) as well as a second open end (30.22), wherein an envelope of the windshield includes an interior volume (30.2) in which the siphon is arranged,
wherein, in relation to a vertical, the first open end is arranged above the second open end,
wherein a cross-section of the tubular wall follows a circle, an oval or a rectangle, for example.

3. Arrangement as claimed in Claim 1 or 2,
wherein the interior volume of the windshield is equal to a third power of an outer radius (12.4) of a siphon bend (12.3) multiplied by a factor F, wherein F is less than 1000, and particularly less than 200 and preferably less than 100.

4. Arrangement as claimed in Claim 2 or 3,
wherein the pressure tapping line has a first section (11.11) facing towards the first end and a second section (11.12) facing towards the second end,
wherein the wall of the windshield has at least a recess (31.1) by means of which the windshield is mounted on the pressure tapping line, wherein pressure tapping line runs through the recess.

5. Arrangement as claimed in Claim 3 or 4,
wherein the siphon bend has an inner side (12.1) and an outer side (12.2),
wherein the windshield has a retainer unit (32), which is set up to rest on the inner side of the siphon.

6. Arrangement as claimed in Claim 5,
wherein the retainer unit has a bar (32.1), which is mounted on the wall (31.2) by means of two openings in the wall.

7. Arrangement as claimed in one of the Claims 4 to 6,
wherein at least a recess has a support (31 .1).

8. Arrangement as claimed in one of the Claims 4 to 7,
wherein at least a mounting of the windshield on the pressure tapping line has a thermal insulation (33),
wherein the thermal insulation has a thermal conductivity which is lower than a thermal conductivity of the pressure tapping line at least by a factor of 5 and particularly by at least a factor of 25, and preferably by at least a factor of 100.

9. Arrangement as claimed in one of the Claims 3 to 8,
wherein the wall is made from a sheet metal, wherein the sheet metal features aluminum, steel or a plastic material for example.

10. Arrangement as claimed in one of the Claims 3 to 9,
wherein the windshield comprises at least a cover element (34) which is designed to partially close the first open end or the second open end of the tubular wall.

11. Arrangement as claimed in Claim 10,
wherein the cover element comprises an aerodynamically effective unit (34.1), which is designed to guide movements of air due to the atmosphere past an opening of the cover (34.2).

12. Arrangement as claimed in one of the Claims 3 to 11,
wherein the siphon is spaced away from the wall.

13. Arrangement as claimed in one of the previous claims,
wherein the pressure tapping line has a valve (13) at its second end, wherein the valve is designed to enable the secure and safe connection of the pressure measuring device,
wherein the valve particularly has an actuating element (13.1) with a longitudinal axis (13.2), such as a rotary handle (13.11) for example, wherein the longitudinal axis has an angle of less than 60 degrees, and particularly of less than 45 degrees, and preferably of less than 30 degrees in relation to a radius of the pressure tapping line.

14. Flow measuring point (100) designed to measure a volume flow or a flow velocity or a mass flow of a vaporous medium in a pipe, comprising:
a pipe (110),
a flowmeter (120) with a measuring tube (121), wherein the measuring tube is connected to the pipe,
an arrangement (1) as claimed in one of the previous claims, wherein the pressure tapping line is connected to the measuring tube of the flowmeter.

15. Flow measuring point as claimed in Claim 14,
wherein the flowmeter is a vortex flowmeter, an ultrasonic flowmeter, a thermal flowmeter or a differential pressure flowmeter.

## Revendications

1. Arrangement (1) comprenant :
une conduite de prise de pression (10) avec une première extrémité (11.21) et
une deuxième extrémité (11.22),
un capteur de pression (20) destiné à mesurer une pression à l'intérieur de la conduite de prise de pression,
la conduite de prise de pression étant conçue pour être raccordée au moyen de la première extrémité à un tube transportant de la vapeur, le capteur de pression étant conçu pour être raccordé à la deuxième extrémité de la conduite de prise de pression, la conduite de prise de pression présentant un siphon (12) conçu partiellement en forme d'arc, lequel siphon est conçu pour contenir un condensat de la vapeur,
l'arrangement étant conçu pour être utilisé en extérieur,
**caractérisé en ce que** l'arrangement comprend un pare-vent (30), lequel est conçu pour réduire les mouvements d'air dus à l'atmosphère au moins dans la zone du siphon.

2. Arrangement selon la revendication 1,
pour lequel le pare-vent présente une paroi tubulaire (30.1) avec une première extrémité ouverte (30.11) ainsi qu'une deuxième extrémité ouverte (30.22), une enveloppe du pare-vent enfermant un volume intérieur (30.2), volume intérieur dans lequel est disposé le siphon,
la première extrémité ouverte étant située au-dessus de la deuxième extrémité ouverte par rapport à une verticale,
une section transversale de la paroi tubulaire suivant, par exemple, un cercle, un ovale ou un rectangle.

3. Arrangement selon la revendication 1 ou 2,
pour lequel le volume intérieur du pare-vent est égal à une puissance trois d'un rayon extérieur (12.4) d'un coude de siphon (12.3) multiplié par un facteur F, F étant inférieur à 1 000, et notamment inférieur à 200 et de préférence inférieur à 100.

4. Arrangement selon la revendication 2 ou 3,
pour lequel la conduite de prise de pression présente un premier tronçon (11.11) tourné vers la première extrémité et un deuxième tronçon (11.12) tourné vers la deuxième extrémité,
la paroi du pare-vent présentant au moins un évidement (31.1) au moyen duquel le pare-vent est monté sur la conduite de prélèvement de pression, la conduite de prélèvement de pression passant par l'évidement.

5. Arrangement selon la revendication 3 ou 4,
pour lequel le coude du siphon présente une face interne (12.1) et une face externe (12.2),
le pare-vent comprenant un dispositif de maintien (32), lequel dispositif de maintien est adapté pour reposer sur la face interne du siphon.

6. Arrangement selon la revendication 5,
pour lequel le dispositif de retenue comprend une nervure (32.1), laquelle nervure est montée sur la paroi (31.2) au moyen de deux ouvertures dans la paroi.

7. Arrangement selon l'une des revendications 4 à 6,
pour lequel au moins un évidement présente un appui (31 .1).

8. Arrangement selon l'une des revendications 4 à 7,
pour lequel au moins un support du pare-vent sur la conduite de prise de pression présente une isolation thermique (33),
l'isolation thermique présentant une conductivité thermique qui est inférieure d'au moins un facteur 5 et notamment d'au moins un facteur 25, et de préférence d'au moins un facteur 100, à une conductivité thermique de la conduite de prise de pression.

9. Arrangement selon l'une des revendications 3 à 8,
pour lequel la paroi est fabriquée à partir d'une tôle, la tôle comprenant par exemple de l'aluminium, de l'acier ou une matière plastique.

10. Arrangement selon l'une des revendications 3 à 9,
pour lequel le pare-vent comprend au moins un élément de couvercle (34) adapté pour fermer partiellement la première extrémité ouverte ou la deuxième extrémité ouverte de la paroi tubulaire.

11. Arrangement selon la revendication 10,
pour lequel l'élément de couvercle comprend un dispositif à effet aérodynamique (34.1), lequel dispositif à effet aérodynamique est conçu pour guider les mouvements d'air dus à l'atmosphère devant une ouverture du couvercle (34.2).

12. Arrangement selon l'une des revendications 3 à 11,
pour lequel le siphon est espacé de la paroi.

13. Arrangement selon l'une des revendications précédentes,
pour lequel la conduite de prise de pression présente à sa deuxième extrémité une vanne (13), laquelle vanne est conçue pour permettre un raccordement sûr du capteur de pression,
la vanne présentant notamment un élément d'actionnement (13.1) avec un axe longitudinal (13.2), comme par exemple une poignée rotative (13.11), lequel axe longitudinal présente un angle de moins de 60 degrés, et notamment de moins de 45 degrés, et de préférence de moins de 30 degrés par rapport à un rayon de la conduite de prise de pression.

14. Point de mesure de débit (100) destiné à mesurer un débit volumique ou une vitesse d'écoulement ou un débit massique d'un produit à l'état de vapeur dans une conduite, lequel point de mesure comprend :
une conduite (110),
un débitmètre (120) avec un tube de mesure (121), le tube de mesure étant relié à la conduite,
un arrangement (1) selon l'une quelconque des revendications précédentes, pour lequel la conduite de prise de pression est raccordée au tube de mesure du débitmètre.

15. Point de mesure de débit selon la revendication 14,
pour lequel le débitmètre est un débitmètre vortex, un débitmètre à ultrasons, un débitmètre thermique ou un débitmètre à pression différentielle.
